(19) Europäisches Patentamt

European Patent Office

Office européen des brevets

(11) Veröffentlichungsnummer : **0 345 424 B1**

(12) # EUROPÄISCHE PATENTSCHRIFT

(45) Veröffentlichungstag der Patentschrift :
**29.07.92 Patentblatt 92/31**

(51) Int. Cl.⁵ : **F16C 3/20**

(21) Anmeldenummer : **89104690.6**

(22) Anmeldetag : **16.03.89**

(54) **Kurbelwelle.**

(30) Priorität : **09.06.88 DE 3819643**

(43) Veröffentlichungstag der Anmeldung :
**13.12.89 Patentblatt 89/50**

(45) Bekanntmachung des Hinweises auf die
Patenterteilung :
**29.07.92 Patentblatt 92/31**

(84) Benannte Vertragsstaaten :
**DE FR GB IT**

(56) Entgegenhaltungen :
**EP-A- 0 243 577**

(56) Entgegenhaltungen :
**EP-A- 0 289 966**
**DE-C- 914 207**
**FR-A- 1 257 444**
**PATENT ABSTRACTS OF JAPAN, Band 8, Nr. 234 (M-334)[1671], 26. Oktober 1984; & JP-A-59 113 313 (KAWASAKI JUKOGYO K.K.)30-06-1984**

(73) Patentinhaber : **Dr.Ing.h.c. F. Porsche Aktiengesellschaft**
**Porschestrasse 42**
**W-7000 Stuttgart 40 (DE)**

(72) Erfinder : **Distelrath, Winfried, Dipl.-Ing.(FH)**
**Thaerstrasse 28**
**W-7000 Stuttgart 31 (DE)**

EP 0 345 424 B1

**Beschreibung**

Die Erfindung betrifft eine Kurbelwelle nach dem Oberbegriff des Patentanspruchs 1.

Es ist bekannt, FR-PS 340 964, an Wangen einer Kurbelwelle Bohrungen vorzusehen, in die Schwermetallkörper aus Blei eingesetzt sind. Damit ist zwar tendentiell ein verbesserter Massenausgleich an Kurbelwellen von Brennkraftmaschinen erreichbar, jedoch sind diese Maßnahmen für ein angestrebtes Optimum, namentlich dort, wo der Kurbelraum einer Brennkraftmaschine und folglich die Kurbelwangengestaltung eingeschränkt ist, noch nicht ausreichend. Hinzu kommt, daß die Bearbeitung der Öffnungen und die Festsetzung der Schwermetallkörper aufwendige Produktionsschritte erfordern.

Aus der EP-A-0 243 577 ist eine Kurbelwelle bekannt, die zur Gewichts- und Baulängenoptimierung bei gutem Massenausgleich im Bereich ihrer Gegengewichte mit Schwermetallkörpern versehen ist. Die Schwermettallkörper sind als separate Teile form- und kraftschlüssig mit den Gegengewichten verbunden.

Aufgabe der Erfindung ist es, an Wangen von Kurbelwellen solche Vorkehrungen zu treffen, daß trotz baulich begrenzten Gegengewichtsradien, beispielsweise durch das Kurbelgehäuse und die Ölwanne einer Kompakt-Brennkraftmaschine, ein guter Massenausgleich der Brennkraftmaschine erzielbar ist.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, daß sich mit den in den Wangen eingebetteten Zusatzgewichten ein Massenausgleich gewünschter Größe einer kompakt gestalteten Brenndraftmaschine realisieren läßt. Dadurch wird die Brenndraftmaschine nicht nur vibrationsärmer, sondern auch ihre Schwungmasse kann reduziert werden. Darüber hinaus kann ihre Leerlaufdrehzahl abgesenkt werden, was sich auf den Kraftstoffverbrauch günstig auswirkt. Überdies lassen sich die Motorlager der Brennkraftmaschine zum Zwecke eines niedrigen Gewichts klein dimensionieren.

Schließlich stellt die Einbringung der Kerne in die Wangen der Kurbelwelle ein einfaches kostengünstiges Verfahren dar.

In der Zeichnung werden Ausführungsbeispiele der Erfindung gezeigt, die nachstehend näher beschrieben sind.

Es zeigt

Fig. 1 eine Teilansicht, teilweise im Schnitt, einer Kurbelwelle für eine Brennkraftmaschine,

Fig. 2 einen Schnitt nach der Linie II-II der Fig. 1,

Fig. 3 eine Ansicht entsprechend der Fig. 1 einer anderen Ausführungsform,

Fig. 4 einen Schnitt nach der Linie IV-IV der Fig. 3,

Fig. 5 eine Ansicht entsprechend Fig. 1 einer anderen Ausführungsform,

Fig. 6 einen Schnitt nach der Linie IV-IV der Fig. 5,

Fig. 7 eine Ansicht entsprechend Fig 1 einer anderen Ausführungsform,

Fig. 8 einen Schnitt nach der Linie VIII-VIII der Fig. 7.

Eine Kurbelwelle aus eisenmetallischem Guß für eine nicht näher dargestellte Brennkraftmaschine der Hubkolben-Bauart umfaßt einen sich entlang einer Längsmittelachse A-A erstreckenden Lagerzapfen 2 und einen dazu mit achsparallelem Abstand verlaufenden Hubzapfen 3. Der Hubzapfen 3 und der Lagerzapfen 2 wird von Wangen 4 begrenzt, die quer zur Längsmittelachse A-A ausgerichtet und entfernt vom Zapfen 3 als den Massenausgleich der Brennkraftmaschine unterstützendes Gegengewicht 4' ausgebildet sind.

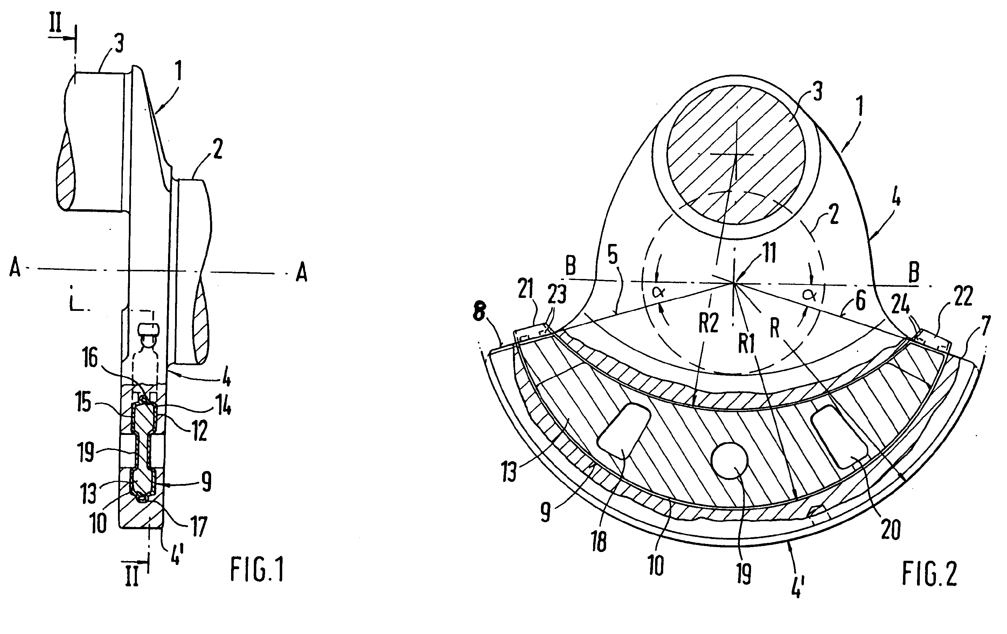

Gemäß Fig. 2 weist das Gegengewicht 4' die Form eines Kreisausschnittes auf und wird einerseits durch im Winkel $\alpha$ zu einer horizontalen, die Längsmittelachse A-A einschließenden Ebene B-B ausgerichtete Konstruktionslinien 5, 6 und andererseits durch den Radius R definiert. Die Konstruktionslinien 5, 6 schließen radiale Begrenzungen 7, 8 des Gegengewichtes 4' ein.

Das Gegengewicht 4' ist mit einem Zusatzgewicht 9 ausgestattet, das als Kern 10 vom Gegengewicht 4 umgeben wird und sich über einen wesentlichen Teilbereich des zuletzt genannten erstreckt. Dabei weist der Kern 10 etwa Sichelform auf, was durch den Radius R1, der kleiner ist als R, aber den gleichen Einsatzpunkt besitzt, und Radius R2 erzielt wird, dessen Einsatzpunkt vom Einsatzpunkt 11 abweicht.

Der Kern 10 wird durch einen Hohlkörper 12 gebildet, der mit einem Schwermetalleinsatz 13, wie Blei, Wismut oder dergleichen, gefüllt ist. Der Hohlkörper 12 besteht aus zwei Halbschalen 14, 15, die an Einrichtungen 16, 17 zusammengesetzt sind, die Formschluß bewirken. Außerdem ist der Hohlkörper 12 mit Einprägungen 18, 19, 20 versehen, wovon die Einprägung 19 nicht nur zur Lagesicherung des Schwermetalleinsatzes 13 in der Kurbelwelle dient, sondern zum Positionieren des Kerns 10 beim Gießen der Kurbelwelle 1. Der Hohlkörper 12 besteht aus einem Edelstahl-Werkstoff, dessen Temperatur-Schmelzpunkt höher ist als der des Gußwerkstoffes der Kurbelwelle 1. Der Schwermetalleinsatz 13 wird entweder während oder nach dem Kurbelwellenguß gefertigt, wobei das Schwermetallmedium über Öffnungen 21, 22 des Hohlkörpers 12 eingebracht wird, die im Bereich der radialen Begrenzungen 7, 8 des Gegengewichts 4' vorgesehen sind. Die Enden 23, 24 der Öffnungen 21, 22 sind nach dem Eingießen des Schwermetalleinsatzes 13 verstemmt.

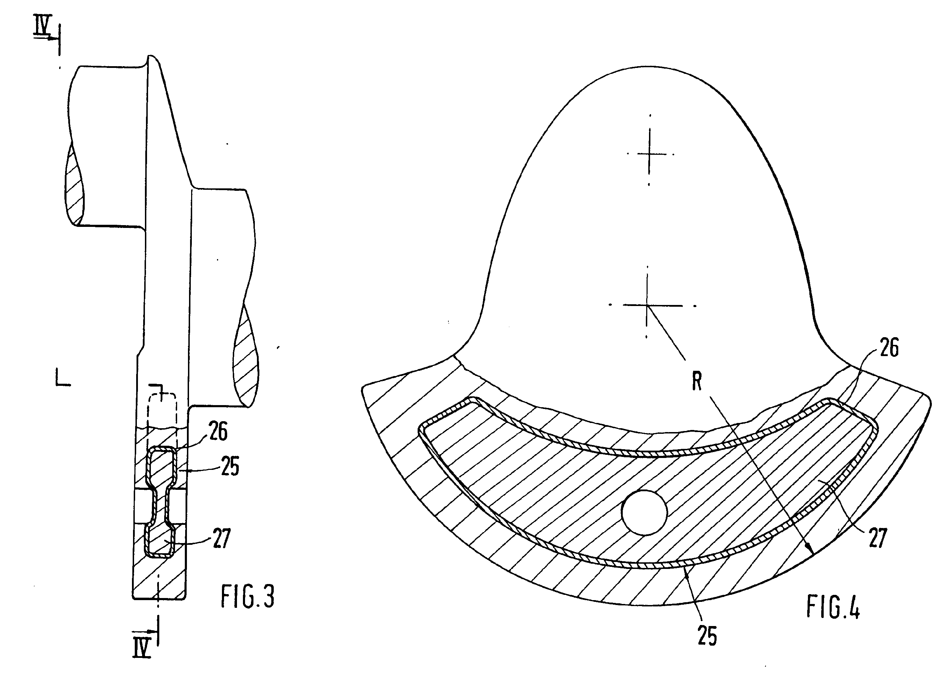

In den Fig. 3 und 4 weist der Kern 25 einen allseitig geschlossenen Hohlkörper 26 aus Edelstahl auf, dessen Schmelzpunkt höher ist als der des Kurbelwellengusses. Der Schwermetalleinsatz 27 besteht hierbei aus Blei oder Wismut.

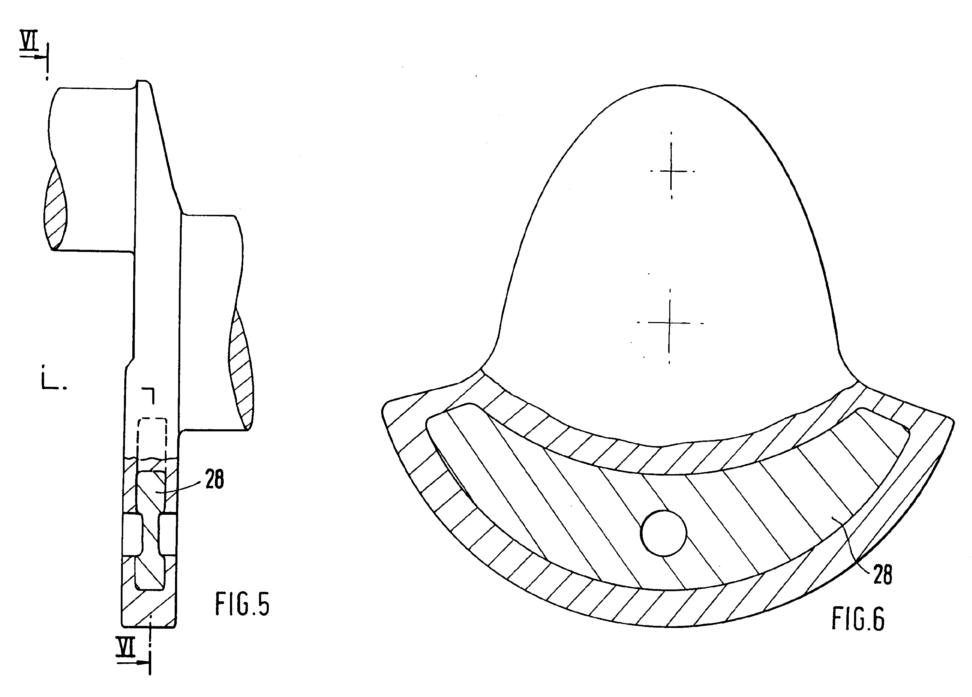

Möglich ist es auch, für den Kern 28 einen Werkstoff zu wählen, beispielsweise eine Wolfram-Legierung, der einen höheren Schmelzpunkt als der Kurbelwellenguß aufweist. Ein solcher Kern wird in den Fig. 5 und 6 gezeigt.

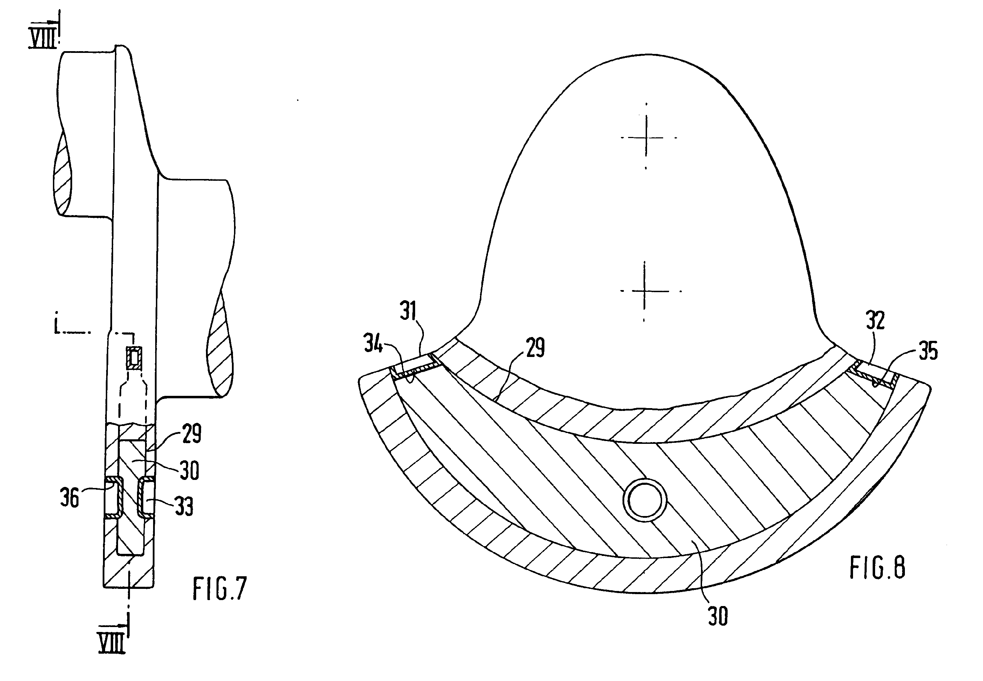

Schließlich geht aus den Fig. 7 und 8 hervor, daß ein Hohlraum 29 für einen Kern 30 durch einen Sandkern gebildet wird, wobei der Kern 30 aus Schwermetall wie Blei, Wismut oder dergleichen besteht. Das entsprechende Schwermetallmedium wird nach dem Gießen der Kurbelwelle über Öffnungen 31, 32, 33 in den Hohlraum 29 eingebracht. Diese Öffnungen sind mit Verschlußelementen 34, 35, 36 versehen.

## Patentansprüche

1. Kurbelwelle (1) aus gegossenem eisenmettallischem Werkstoff für Hubkolbenmaschinen, vorzugsweise Brennkraftmaschinen mit Lagerzapfen (2) und Hubzapfen (3), wobei die Hubzapfen (3) von sich quer zur Kurbelwellenlängsmittelaschse (A-A) erstreckenden Wangen (4) begrenzt werden, die Gegengewichte (4') bilden und mit Zusatzgewichten (9) versehen sind, **dadurch gekennzeichnet**, daß die Zusatzgewichte (9) als in den Gegengewichten (4') eingegossene Kerne (10, 24, 27, 29) ausgebildet sind.

2. Kurbelwelle nach Anspruch 1, dadurch gekennzeichnet, daß der Kern (10) einen Hohlkörper (12) umfaßt, der mit einem Schwermetalleinsatz (13) gefüllt ist.

3. Kurbelwelle nach Anspruch 2, dadurch gekennzeichnet, daß der Hohlkörper (12) mit wenigstens einer Einprägung (18, 19, 20) versehen ist.

4. Kurbelwelle nach Anspruch 2, dadurch gekennzeichnet, daß der Hohlkörper (12) durch zwei Halbschalen (14, 15) gebildet wird, die vorzugsweise an Formschluß bewirkenden Einrichtungen (16, 17) zusammengesetzt sind.

5. Kurbelwelle nach Anspruch 2, dadurch gekennzeichnet, daß der Hohlkörper (12) aus einem Werkstoff, beispielsweise Edelstahl, besteht, dessen Schmelzpunkt höher ist als der Schmelzpunkt des Kurbelwellen-Werkstoffs.

6. Kurbelwelle nach Anspruch 2, dadurch gekennzeichnet, daß der Hohlkörper (12) an radialen Begrenzungen (7, 8) der Wange (4) Öffnungen (21, 22) aufweist.

7. Kurbelwelle nach den Ansprüchen 2 und 5, dadurch gekennzeichnet, daß der Hohlkörper (26) allseits geschlossen ist und mit einem Schwermetalleinsatz (27) wie Blei, Wismut oder dergleichen gefüllt ist.

8. Kurbelwelle nach Anspruch 1, dadurch gekennzeichnet, daß der Kern (28) aus einem Werkstoff, beispielsweise Wolfram, besteht, der einen höheren Schmelzpunkt aufweist als der Schmelzpunkt des Kurbelwellen-Werkstoffs.

9. Kurbelwelle nach Anspruch 1, dadurch gekennzeichnet, daß der Kern (30) in einem durch einen Sandkern erzeugten Hohlraum (29) ruht und aus einem Schwermetalleinsatz wie Blei, Wismut oder dergleichen besteht.

10. Kurbelwelle nach Anspruch 9, dadurch gekennzeichnet, daß der Kern (30) über eine oder mehrere Öffnungen (31, 32, 33) eingebracht ist, die mit Verschlußelementen (34, 35, 36) versehen sind.

## Claims

1. A crankshatt (1) of cast ferrous-metal material for reciprocating-piston engines, preferably internal combustion engines, with bearing pins (2) and crank pins (3), the crank pins (3) being bounded by side plates (4) which extend transversely to the longitudinal median axis (A-A) of the crankshaft and which form counterweights (4') and are provided with additional weights (9), **characterized in that** the additional weights (9) are constructed as cores (10, 24, 27, 29) cast into the counterweights (4').

2. A crankshaft according to Claim 1, characterized in that the core (10) comprises a hollow body (12) filled with a heavy-metal insert (13).

3. A crankshaft according to Claim 2, characterized in that the hollow body (12) is provided with at least one indentation (18, 19, 20).

4. A crankshaft according to Claim 2, characterized in that the hollow body (12) is formed by two half shells (14, 15) which are preferably joined on devices (16, 17) producing a positive locking.

5. A crankshaft according to Claim 2, characterized in that the hollow body (12) consists of a material, for example high-grade steel, the melting point of which is higher than the melting point of the crankshaft material.

6. A crankshaft according to Claim 2, characterized in that the hollow body (12) has openings (21, 22) on radial limits (7, 8) of the side plate (4).

7. A crankshaft according to Claims 2 and 5, characterized in that the hollow body (12) is closed on all sides and is filled by a heavy-metal insert (27) such as lead, bismuth or the like.

8. A crankshatt according to Claim 1, characterized in that the core (28) consists of a material, for example tungsten, which has a melting point higher than the melting point of the crankshatt material.

9. A crankshaft according to Claim 1, characterized in that the core (30) rests in a cavity (29) formed by a sand core and consists of a heavy-metal insert such as lead, bismuth or the like.

10. A crankshaft according to Claim 9, characterized in that the core (30) is inserted by way of one or more openings (31, 32, 33) provided with closure members (34, 35, 36).

**Revendications**

1. Vilebrequin (1) coulé en fonte de fer pour des machines à piston alternatif, de préférence des moteurs à combustion interne comportant des tourillons (2) et des manetons (3), les manetons (3) étant délimités par des flasques (4) s'étendant transversalement par rapport à l'axe de symétrie longitudinal (A-A) du vilebrequin, qui constituent des contrepoids (4') et comportent des poids supplémentaires (9), **caractérisé en ce que** les poids supplémentaires (9) se présentent sous la forme de noyaux (10, 24, 27, 29) coulés dans les contrepoids (4').

2. Vilebrequin selon la revendication 1, caractérisé en ce que le noyau (10) comprend un corps creux (12) qui est comblé par une insertion de métal lourd (13).

3. Vilebrequin selon la revendication 2, caractérisé en ce que le corps creux (12) comporte au moins un refonfoncement (18, 19, 20).

4. Vilebrequin selon la revendication 2, caractérisé en ce que le corps creux (12) est formé par deux moitiés (14, 15), qui sont assemblées de préférence sur des dispositifs (16, 17) produisant un assemblage par concordance de forme.

5. Vilebrequin selon la revendication 2, caractérisé en ce que le corps creux (12) est en une matière, par exemple en acier spécial, dont le point de fusion est supérieur au point de fusion de la matière du vilebrequin.

6. Vilebrequin selon la revendication 2, caractérisé en ce que le corps creux (12) comporte des ouvertures (21, 22) sur des limitations radiales (7, 8) du flasque (4).

7. Vilebrequin selon les revendications 2 et 5, caractérisé en ce que le corps creux (26) est fermé de toutes parts et est comblé par une insertion de métal lourd (27), par exemple de plomb, de bismuth ou d'un métal analogue.

8. Vilebrequin selon la revendication 1, caractérisé en ce que le noyau (28) est en une matière, par exemple en tungstène, qui présente un point de fusion plus élevé que le point de fusion de la matière du vilebrequin.

9. Vilebrequin selon la revendication 1, caractérisé en ce que le noyau (30) repose dans une cavité (29) produite par un noyau de moulage en sable et est constitué par une insertion de métal lourd, exemple de plomb, de bismuth ou d'un métal analogue.

10. Vilebrequin selon la revendication 9, caractérisé en ce que le noyau (30) est introduit par une ou plusieurs ouvertures (31, 32, 33) qui comportent des éléments de fermeture (34, 35, 36).

FIG.1

FIG.2

EP 0 345 424 B1

26

27

FIG.4

R

25

FIG.3

26

25

27

IV

IV

6

EP 0 345 424 B1

FIG.5

FIG.6

FIG.8

FIG.7